# EUROPEAN PATENT APPLICATION

(11) **EP 4 424 503 A1**
(43) Date of publication of application: **04.09.2024**
(21) Application number: 21962296.6
(22) Date of filing: 25.10.2021
(51) Int. Cl.: B32B 5/12, B32B 27/06, B32B 7/027

(54) **LAMINATE, LAMINATE MANUFACTURING METHOD, AND SPACE STRUCTURE**

(71) Applicant: MITSUBISHI ELECTRIC CORPORATION, Chiyoda-ku Tokyo 100-8310 (JP)
(72) Inventor: TAKAGAKI, Kazunori, Tokyo 100-8310 (JP); ITO, Yohei, Tokyo 100-8310 (JP); KOBAYASHI, Hiroki, Tokyo 100-8310 (JP); KOYAMA, Tatsuya, Tokyo 100-8310 (JP)
(74) Representative: Meissner Bolte Partnerschaft mbB
(86) International application number: PCT/JP2021/039199
(87) International publication number: WO 2023/073745

(57) **Abstract**

The laminate (1) includes a divided layer (12) which is a layer having three or more regions by being divided into three or more in planar view in a subject direction. A thermal expansion coefficient in the subject direction of a material that constitutes at least one region of the regions of the divided layer (12) differs from a thermal expansion coefficient in the subject direction of a material that constitutes at least one region of other regions of the divided layer (12).

## Description

### Technical Field

The present invention relates to a laminate, a laminate manufacturing method, and a space structure.

### Background Art

In an optical observation satellite, it is preferable to photograph a high-resolution image with excellent readability and stable image quality. Therefore, in the optical observation satellite, it is required to be able to maintain stable optical observation performance in an orbit for a long period of time. A support structure body with dimensional stability is required in order to realize such an optical observation satellite.

Conventionally, there has been a low thermal expansion metal such as Super Invar as a material with high dimensional stability. However, a specific gravity of the low thermal expansion metal is high. Therefore, an optical observation satellite in which an increase in weight greatly affects cost and performance has a problem that it is difficult to apply the low thermal expansion metal especially to the large support structure body.

Then, fiber reinforced plastics such as Carbon Fiber Reinforced Plastics (CFRP) have been used as materials of the support structure body. The fiber reinforced plastics including the CFRP are laminates composed of reinforced fiber and matrix resin. Since the matrix of the fiber reinforced plastics is plastics, a specific gravity is about 1/4 as compared with that of a metal material, and the fiber reinforced plastics are lighter than the metal material. Further, the reinforced plastics can achieve an extremely small thermal expansion coefficient by appropriately designing such as a combination and a ratio of reinforced fiber and matrix resin to be used, and a fiber orientation for each layer.

Patent Literature 1 discloses a low linear expansion coefficient-fiber reinforced resin composite material. In the low linear expansion coefficient-fiber reinforced resin composite material, by combining two or more types of reinforced fiber, at least one of which has a negative linear expansion coefficient, an in-plane quasi-isotropic plate is formed by laminating prepreg sheets composed of the combined reinforced fiber.

### Citation List

### Patent Literature

Pamphlet of WO 2000/064668 A1

### Summary of the Invention

### Technical Problem

In the structure of the technique disclosed in Patent Literature 1, a layer having a positive linear thermal expansion coefficient and a layer having negative linear thermal expansion coefficient cancel out each thermal expansion and thermal contraction. Therefore, a linear thermal expansion coefficient of entire fiber reinforced plastics can be extremely small.

However, a low linear expansion coefficient-fiber reinforced resin composite material disclosed in Patent Literature 1 has a problem that a plurality of layers are required to cancel out the thermal expansion and the thermal contraction of each layer. Further, there is a problem that the low linear expansion coefficient-fiber reinforced resin composite material cannot flexibly realize a laminate that is composed of fiber reinforced plastics and has a thermal expansion coefficient required in a case where a relation with another material is considered.

The present invention does not require a plurality of layers to cancel out thermal expansion and thermal contraction of each layer, and aims to flexibly realize a laminate that is composed of fiber reinforced plastics and has a thermal expansion coefficient required in a case where a relation with another material is considered.

### Solution to the Problem

A laminate according to the present invention includes a divided layer which is a layer having three or more regions by being divided into three or more in planar view in a subject direction, wherein
a thermal expansion coefficient in the subject direction of a material that constitutes at least one region of the regions of the divided layer differs from a thermal expansion coefficient in the subject direction of a material that constitutes at least one region of other regions of the divided layer.

### Advantageous Effects of the Invention

According to the present invention, a laminate includes a divided layer which is a layer having three or more regions. Then, a thermal expansion coefficient in a subject direction of a material that constitutes at least one of the regions of the divided layer differs from a thermal expansion coefficient in a subject direction of a material that constitutes at least one of other regions of the divided layer.

Therefore, the thermal expansion coefficient in the subject direction can be controlled by one layer of the divided layer. Accordingly, according to the present invention, a plurality of layers are not required to cancel out thermal expansion and thermal contraction of each layer, and it is possible to flexibly realize a laminate that is composed of fiber reinforced plastics and has a thermal expansion coefficient required in a case where a relation with another material is considered.

### Brief Description of the Drawings

FIG. 1 is a perspective view illustrating a configuration example of a laminate 1 according to Embodiment 1.
FIG. 2 is a diagram illustrating configuration examples of a divided layer 12 according to Embodiment 1 where (a) is a plan view and (b) is a side view.
FIG. 3 is a plan view explaining a case where a fiber orientation of each of divided region constituent materials 21 according to Embodiment 1 is not constant.
FIG. 4 is a plan view explaining a case where each of the divided region constituent materials 21 according to Embodiment 1 has the same fiber orientation.
FIG. 5 is a plan view illustrating a configuration example of the divided layer 12 according to Embodiment 2.
FIG. 6 is a side view illustrating a configuration example of the divided layer 12 according to Embodiment 3.
FIG. 7 is a side view illustrating a configuration example of the laminate 1 according to Embodiment 4.
FIG. 8 is a flow diagram illustrating a manufacturing method of the laminate 1 according to Embodiment 5.

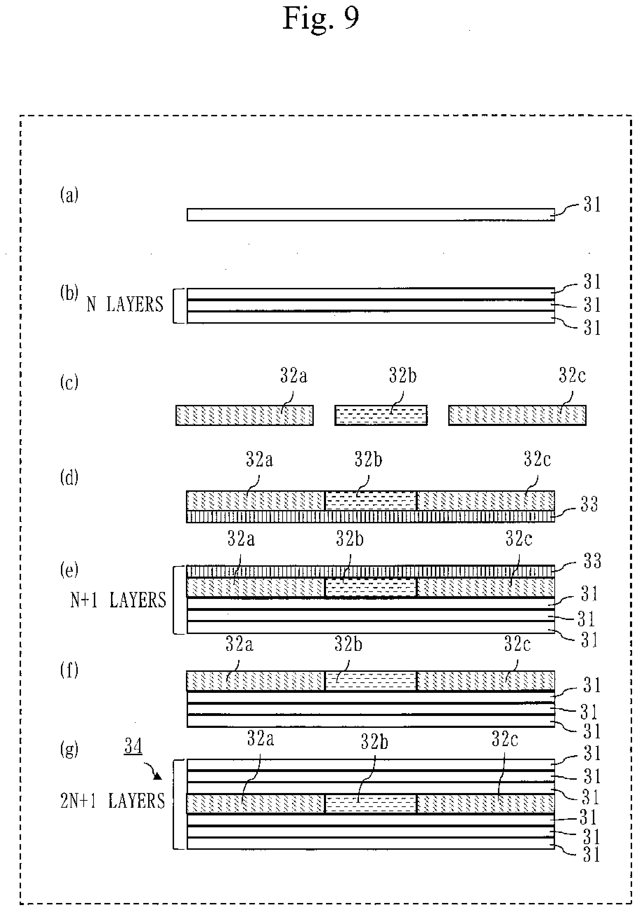

FIG. 9 is an explanation diagram illustrating the manufacturing method of the laminate 1 according to Embodiment 5 where (a) is a diagram illustrating an undivided intermediate body 31, (b) is a diagram illustrating the undivided intermediate body 31 in an N-layer, (c) is a diagram illustrating a divided intermediate body 32, (d) is a diagram illustrating a state in which the divided intermediate body 32 is arranged on a film 33, (e) is a diagram illustrating a state in which the divided intermediate body 32 is laminated, (f) is a diagram illustrating a state in which the divided intermediate body 32 is laminated, and (g) is a diagram illustrating a configuration example of an aggregation 34.
FIG. 10 is a schematic diagram illustrating a space structure 101 according to Embodiment 6.
FIG. 11 is a schematic diagram illustrating the inside of a telescope 114 according to Embodiment 6.

### Description of Embodiments

Hereinafter, a laminate 1, a manufacturing method of the laminate 1, and a space structure 101 to which the laminate 1 is applied for performing the present invention will be described with reference to the drawings. In the description of the drawings, the same or the corresponding portions are denoted by the same reference signs, and an overlapping description is omitted as appropriate.

### Embodiment 1.

Hereinafter, the present embodiment will be described in detail with referring to the drawings.

### Description of Configuration

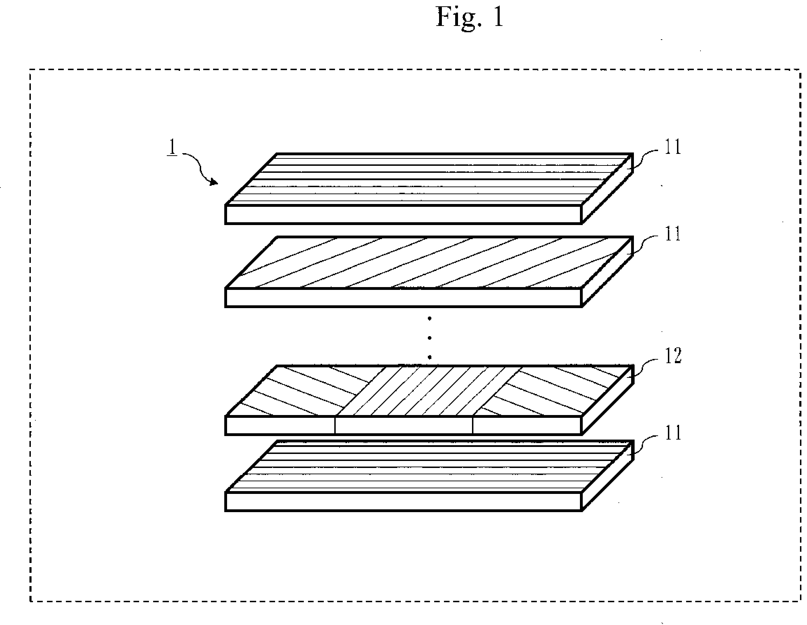

FIG. 1 is a perspective view illustrating a configuration example of the laminate 1 according to Embodiment 1. The laminate 1 is formed by a plurality of layers. Half or more of the layers that form the laminate 1 are composed of fiber reinforced plastics. However, other layers may be composed of a material other that the fiber reinforced plastics. The fiber reinforced plastics are composed of reinforced fiber and plastics of matrix. The laminate 1 is also referred to as a fiber reinforced plastic laminate.

Further, the layers that form the laminate 1 include an undivided layer 11 and a divided layer 12. The undivided layer 11 is a layer composed of a single material, and is also referred to as a layer that is not divided within the layers. The divided layer 12 is a layer composed of a plurality of materials, and is referred to as a layer that is divided within the layers. Each material of the plurality of materials that compose the divided layer 12 constitutes a region. That is, there are a plurality of regions in the divided layer 12. There may be a plurality of layers of each of the undivided layer 11 and the divided layer 12.

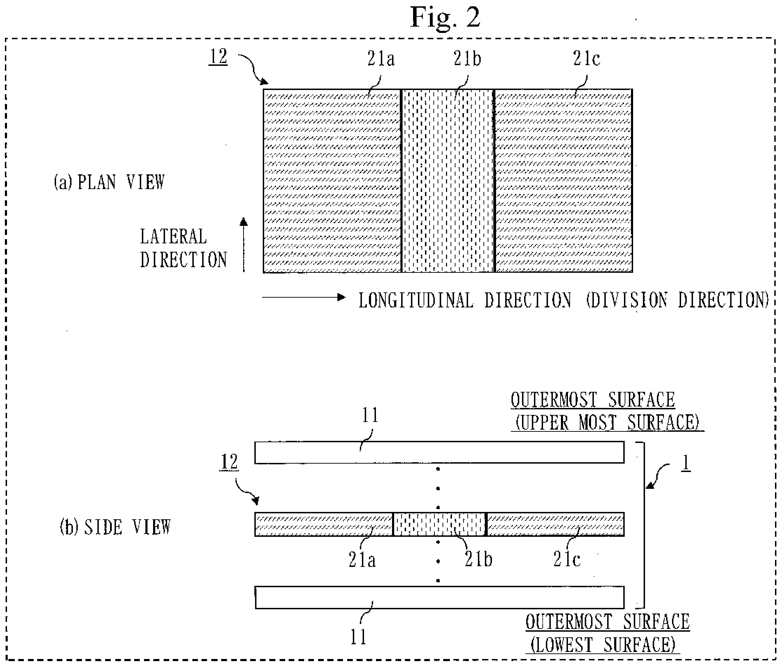

FIG. 2 illustrates a configuration example of the divided layer 12 among the layers that form the laminate 1 according to Embodiment 1. Here, (a) of FIG. 2 is a plan view and (b) of FIG. 2 is a side view. The divided layer 12 is divided into at least three regions in the longitudinal direction, the lateral direction, or both of them of the laminate 1. In the following, a direction into which each of the divided layers 12 is divided is referred to as a division direction in each of the divided layers 12.

As a specific example, in FIG. 2, the divided layer 12 is divided into three in the longitudinal direction and the division direction in the divided layer 12 is the longitudinal direction. When the divided layer 12 is divided into both of the longitudinal direction and the lateral direction, the division directions in the divided layer 12 are both of the longitudinal direction and the lateral direction. The division direction is also referred to as a subject direction.

That is, the divided layer 12 is a layer having three or more regions by being divided into three or more in planar view in the subject direction. The divided layer 12 may not be divided by a boundary orthogonal to the subject direction in the planar view. Further, a boundary of the divided layer 12 may not extend from one end of the divided layer 12 to the other end in the planar view.

In the divided layer 12, at least one of the plurality of divided region constituent materials 21 and at least one of the plurality of the other divided region constituent materials 21 have different thermal expansion coefficients in the division direction. That is, the thermal expansion coefficient in the subject direction of the material that constitutes at least one of the regions of the divided layer 12 differs from the thermal expansion coefficient in the subject direction of the material that constitutes at least one of the other regions of the divided layer 12. Here, the divided region constituent material 21 is a material that constitutes each region of the regions of the divided layer 12.

In FIG. 2, the thermal expansion coefficient of a divided region constituent material 21b differs from the thermal expansion coefficient of each of a divided region constituent material 21a and a divided region constituent material 21c. Each of the divided region constituent materials 21 is arranged in a state of facing the divided region constituent material 21 adjacent to each of the divided region constituent materials 21. Therefore, in each of the divided layers 12, there is no gap between the divided region constituent materials 21 adjacent to each other.

According to the configuration described above, since the divided layers 12 have materials whose thermal expansion coefficients in the division direction differ from each other, it is possible to obtain as a thermal expansion coefficient of the entire divided layer 12, a thermal expansion coefficient that differs from the thermal expansion coefficient of each of the materials that constitute the divided layer 12. Further, by controlling a rate of the material that constitutes each of the regions of the divided layer 12 in the division direction, it is possible to obtain without increasing the thickness of the divided layer 12, the divided layer 12 and the laminate 1 each of which has an appropriate thermal expansion coefficient within a predetermined range.

Hereinafter, a specific example of a technique of obtaining a plurality of kinds of thermal expansion coefficients in the division direction of the divided layer 12 will be described.

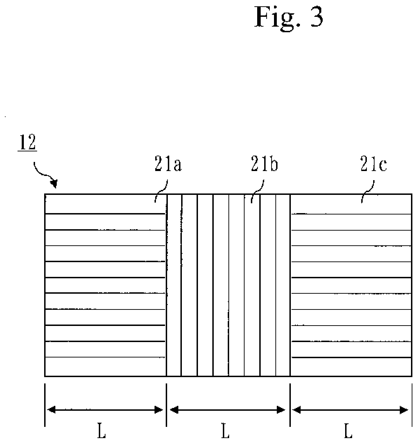

FIG. 3 is a plan view illustrating a configuration example of the divided layer 12 in a case where the divided region constituent material 21 in the divided layer 12 is composed of one type of fiber reinforce plastics, and there are in the division direction, a plurality of fiber orientations of the fiber reinforced plastic that constitutes the divided area.

In FIG. 3, the fiber orientation in the planar view of the material that constitutes at least one region of the regions of the divided layer 12 differs from the fiber orientation in the planar view of the material that constitutes at least one region of other regions of the divided layer 12.

A plurality of kinds of thermal expansion coefficients can be obtained in the division direction by preparing a plurality of types of fiber orientations in the division direction. In FIG. 3, the divided layer 12 is divided into three regions in the longitudinal direction. Further, the fiber orientations are different between the divided region constituent material 21a positioned at the left end in the longitudinal direction of the divided layer 12 and the divided region constituent material 21c positioned at the right end in the longitudinal direction, and the divided region constituent material 21b positioned at the center in the longitudinal direction.

Here, as an example, a case will be described where fiber reinforced plastic composed of carbon fiber T800S (manufactured by Toray Industries, Inc.) and epoxy resin is used in a divided layer 12. In the divided layer 12, the case is considered where the length of each of the divided region constituent materials 21 in the division direction is assumed to be L:L:L, that is, a ratio of the lengths in the division direction is assumed to be 1:1:1, and the fiber orientation of each of the divided region constituent materials 21 is assumed to be 0°:90°:0°.

In this case, the thermal expansion coefficient in the division direction of the entire divided layer 12 is 12.2 × 10⁻⁶/°C. Here, the fiber orientation 0° indicates the longitudinal direction, the fiber orientation 90° indicates the lateral direction, and the fiber orientation of each of the divided region constituent materials 21 is indicated by a line in FIG. 3. Note that at least four fiber reinforced plastic layers are required in order to achieve the thermal expansion coefficient described above without dividing the material in one layer in a case where the fiber reinforced plastic is used.

On the other hand, only one fiber reinforced plastic layer is sufficient in this example. Therefore, the total thickness of the fiber reinforced plastic layer in the case where the fiber reinforced plastic layer is not divided is four or more times as compared with the thickness of the fiber reinforced plastic layer according to this example.

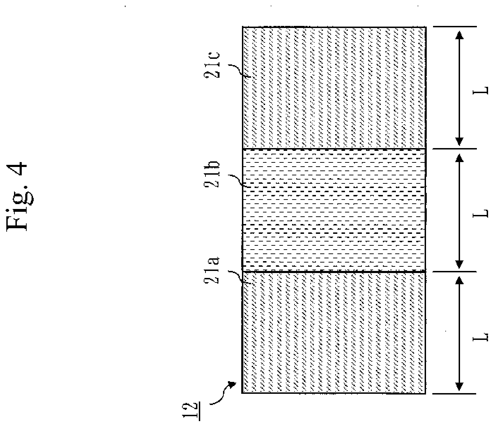

FIG. 4 is a plan view illustrating a configuration example of the divided layer 12 in a case where the divided region constituent materials 21 of the divided layer 12 are composed of two types of fiber reinforced plastics that have the same fiber orientations. In FIG. 4, at least one of fiber and matrix resin differs between a material that constitutes at least one region of the regions of the divided layer 12 and a material that constitutes at least one region of other regions of the divided layer 12.

In FIG. 4, the divided layer 12 is divided into three regions in the longitudinal direction. Further, the materials are different between the divided region constituent material 21a positioned at the left end in the longitudinal direction of the divided layer 12 and the divided region constituent material 21c positioned at the right end in the longitudinal direction, and the divided region constituent material 21b positioned at the center in the longitudinal direction.

Here, as an example, a case will be described where fiber reinforced plastic composed of carbon fiber T800S (manufactured by Toray Industries, Inc.) and epoxy resin is used as the divided region constituent material 21a and the divided region constituent material 21c in a divided layer 12, and fiber reinforced plastic composed of carbon fiber K13C (manufactured by Mitsubishi Chemical Corporation) and epoxy resin is used as the divided region constituent material 21b in the divided layer 12.

In the divided layer 12, the case is considered where the length of each of the divided region constituent materials 21 in the division direction is assumed to be L:L:L, that is, a ratio of the lengths in the division direction is assumed to be 1:1:1, and the fiber orientation of each of the divided region constituent materials 21 is assumed to be 0°:0°:0°. In this case, the thermal expansion coefficient in the division direction of the entire divided layer 12 is 0.5 × 10⁻⁶/°C. In this example, stress can be continuously transmitted by equalizing the fiber orientation of each of the divided region constituent materials 21.

The case has been described where there are two kinds of thermal expansion coefficients in the division direction of the divided region constituent materials 21 in the divided layer 12. However, as long as the thermal expansion coefficient in the division direction can be controlled to be a desirable value, there may be three or more kinds of thermal expansion coefficients in the division direction.

Further, in the present embodiment, the case has been described where the carbon fiber is used as the reinforced fiber of the fiber reinforced plastic and the epoxy resin is used as the matrix material. However, another reinforced fiber and another matrix resin may be used to achieve a desirable thermal expansion coefficient. As a specific example, glass fiber, aluminum oxide fiber, boron fiber, silicon carbide fiber, aramid fiber, Kevlar (registered trademark) fiber, Dyneema (registered trademark) fiber, Zylon (registered trademark) fiber, hemp fiber, or the like may be used as the reinforced fiber.

Further, the form of the fiber may be any form such as short fiber, long fiber, or woven fabric or braid using them. As a specific example, unsaturated polyester resin, vinyl ester resin, phenol resin, cyanate ester resin, polyvinyl acetate, polycarbonate, polyacetal, polyphenylene oxide, polyphenylene sulfide, polyarylate, polyester, polyamideimide, polyimide, polyetherimide, or the like may be used as the matrix resin.

Further, the case has been described where the fiber reinforced plastic is used as a material that constitutes the divided layer 12. However, the material may not be the fiber reinforced plastic. As a specific example, rubber, resin, metal, ceramic, or the like, or a combination thereof may be used as the material.

Further, the case has been described where an angle of the fiber orientation of the divided region constituent material 21 is either 0° or 90°. However, the angle of the fiber orientation of the divided region constituent material 21 may be arbitrary. As a specific example, 0°, 15°, 30°, 45°, 60°, 75°, 90°, or the like may be used as the angle of the fiber orientation.

Further, the technique of using a plurality of types of materials and the technique of preparing a plurality of types of fiber orientations of the fiber reinforced plastic has been separately described as techniques of controlling the thermal expansion coefficient in the division direction of the entire divided layer 12. However, these techniques may be used in combination, or at least one of these techniques may be used in combination with another technique. As a specific example, changing a ratio of the lengths in the division direction of the divided region constituent material 21 is considered as the other technique.

As a specific example, when the divided layer 12 is divided into three divisions in the division direction, the ratio of the lengths in the division direction of the divided region constituent materials 21 each of which constitutes each of the divided regions may be 10:1:10, 5:1:5, 3:1:3, 2:1:2, 1:2:1, 1:3:1, 1:5:1, 1:10:1, or the like.

Further, the case has been described where the division direction is the longitudinal direction. However, the division direction may be the longitudinal direction, the lateral direction, or both of those directions. Further, the case has been described where a division number is 3. However, the division number is not necessarily limited to 3. As a specific example, the divided layer 12 may be divided into 2 pieces, 4 pieces, 5 pieces, 10 pieces, or the like of regions. When the divided layer 12 is divided in both of the longitudinal direction and the lateral direction, the division number in each direction may not be consistent with each other.

Further, the technique of dividing the divided layer 12 into rectangles has been described. However, the divided layer 12 may be divided into forms other than the rectangles as long as the forms allow the adjacent divided region constituent materials 21 to be arranged relatively easily and without gaps in the same layer. The forms are, as a specific example, hexagons, trapezoids, rhombuses, or the like. There may be a plurality of types of forms of the divided region constituent materials 21 in the same layer.

Further, the case has been described where the form of the laminate 1 is a flat plate. However, the form of a cross-section of the laminate 1 may be a cylinder, a rectangular tube, a T-shape, an I-shape, or the like. When the form of the cross-section is the T-shape, the I-shape, or the like, it is sufficient that the divided layer 12 is divided in at least one of the longitudinal direction and the lateral direction on at least one of sides that constitute the divided layer 12.

### Description of Effects of Embodiment 1

According to the present embodiment, a characteristic of a fiber reinforced plastic layer included in the laminate 1 can be flexibly designed.

### Embodiment 2.

Hereinafter, differences from the embodiment described above will be mainly described with reference to the drawings.

### Description of Configuration

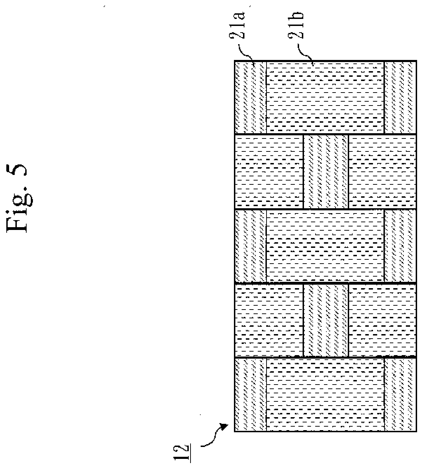

FIG. 5 is a plan view illustrating a configuration example of the divided layer 12 according to Embodiment 2. In FIG. 5, each of the divided region constituent materials 21 is arranged symmetrically in each of division directions with regard to constituent materials and dimensions, in the planar view. Each of the divided region constituent materials 21 may not be arranged strictly symmetrically in each of the division directions with regard to the constituent materials and the dimensions.

In FIG. 5, the division directions are the longitudinal direction and the lateral direction, and a specific example of using the divided region constituent material 21a and the divided region constituent material 21b is illustrated. The divided layer 12 is divided into five divisions in the longitudinal direction and three divisions in the lateral direction. The divided region constituent material 21a and the divided region constituent material 21b are arranged in a staggered pattern in the planar view. The divided region constituent material 21a and the divided region constituent material 21b have different thermal expansion coefficients in each of the longitudinal direction and the lateral direction.

The case has been described where the divided region constituent materials 21 are arranged in the staggered pattern in the planar view. However, each of the divided region constituent materials 21 may be arranged in any manner in the divided layer 12 as long as symmetry in the division direction of the divided layer 12 is maintained in the planar view. Therefore, the divided region constituent materials 21 may be arranged in, as a specific example, a grid pattern or the like in the planar view.

### Description of Effects of Embodiment 2

According to the present embodiment, since the divided layer 12 has a symmetrical configuration in the division direction, it is possible to relax a curve due to thermal deformation that occurs when the laminate 1 is formed and used. Further, according to the present embodiment, it is possible to relax a variation in a material property within the divided layer 12.

### Embodiment 3.

Hereinafter, differences from the embodiments described above will be mainly described with reference to the drawings.

### Description of Configuration

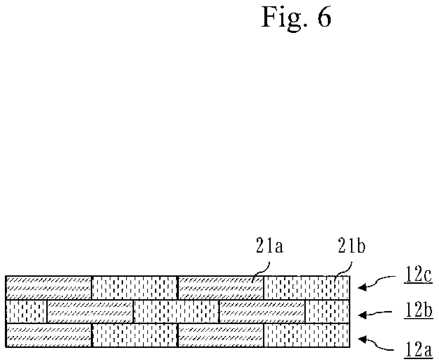

FIG. 6 is a side view illustrating a configuration example of the divided layer 12 according to Embodiment 3. In FIG. 6, the laminate 1 has a plurality of continuous divided layers 12, and division positions of materials each of which constitutes each of the divided layers 12 are not consistent with each other between two adjacent divided layers 12. That is, positions of boundaries between regions of the two adjacent divided layers 12 are different between the two adjacent divided layers 12.

Here, as an example, a case will be described where three continuous layers among layers of the laminate 1 are the divided layers 12, and each of the divided layers 12 is composed of the divided region constituent material 21a and the divided region constituent material 21b. Here, among the three layers of the divided layers 12, a layer positioned at the lowest is referred to as a lowest layer 12a, a layer positioned at the middle is referred to as an intermediate layer 12b, and a layer positioned at the upper most is referred to as an upper most layer 12c.

The positions of the boundaries between the divided region constituent materials 21 in the lowest layer 12a are designed not to be consistent with the positions of the boundaries between the divided region constituent materials 21 in the intermediate layer 12b. Further, similarly, the positions of the boundaries between the divided region constituent materials 21 in the intermediate layer 12b are designed not to be consistent with the positions of the boundaries between the divided region constituent materials 21 in the upper most layer 12c.

### Description of Effects of Embodiment 3

According to the present embodiment, low-strength points are varied in the laminate 1 by causing division points not to be consistent with each other between the adjacent divided layers 12. Therefore, according to the present embodiment, it is possible to relax a decrease in strength of the laminate 1. Further, according to the present embodiment, a mechanical property of the laminate 1 is improved.

### Embodiment 4.

Hereinafter, differences from the embodiments described above will be mainly described with reference to the drawings.

### Description of Configuration

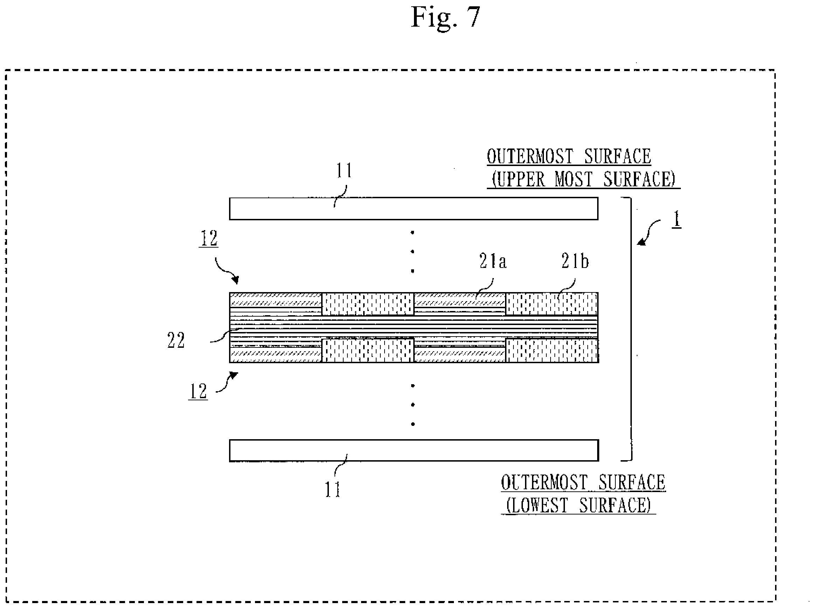

FIG. 7 is a side view illustrating a configuration example of the laminate 1 according to Embodiment 4. The laminate 1 has at least one resin layer 22 in addition to the divided layers 12. Each of the lowest surface and the upper most surface of the laminate 1 is composed of fiber reinforced plastic, and is not the divided layer 12, that is, is the undivided layer 11. FIG. 7 illustrates a specific example in which there is the resin layer 22 between two layers of the divided layers 12. The divided layer 12 may be adjacent to only one side of the resin layer 22.

It is preferable that the thickness of the resin layer 22 is equal to or greater than a difference between the thickness of the thickest divided region constituent material 21 and the thickness of the thinnest divided region constituent material 21 among the divided region constituent materials 21 that constitute the divided layer 12 adjacent to the resin layer 22. Further, although the resin layer 22 may be divided, it is preferable that the resin layer 22 is not divided.

As a specific example, epoxy resin, acrylate resin, unsaturated polyester resin, vinyl ester resin, phenol resin, cyanate ester resin, or the like is used as the resin layer 22. When a layer adjacent to the resin layer 22 is composed of fiber reinforced plastic, it is preferable to use for the resin layer 22, the same resin as or similar resin to matrix resin that constitutes the fiber reinforced plastic.

### Description of Effects of Embodiment 4

According to the present embodiment, when there are a plurality of kinds of thicknesses of the divided region constituent materials 21 that constitute the divided layer 12, it is possible to cancel out a difference between the thicknesses of the divided region constituent materials 21, using the resin layer 22. Therefore, according to the present embodiment, surface smoothness of the laminate 1 is maintained.

Further, according to the present embodiment, since a surface layer of the laminate 1 is not the divided layer 12, the surface smoothness of the laminate 1 is maintained.

### Embodiment 5.

Hereinafter, differences from the embodiments described above will be mainly described with reference to the drawings.

### Description of Operation

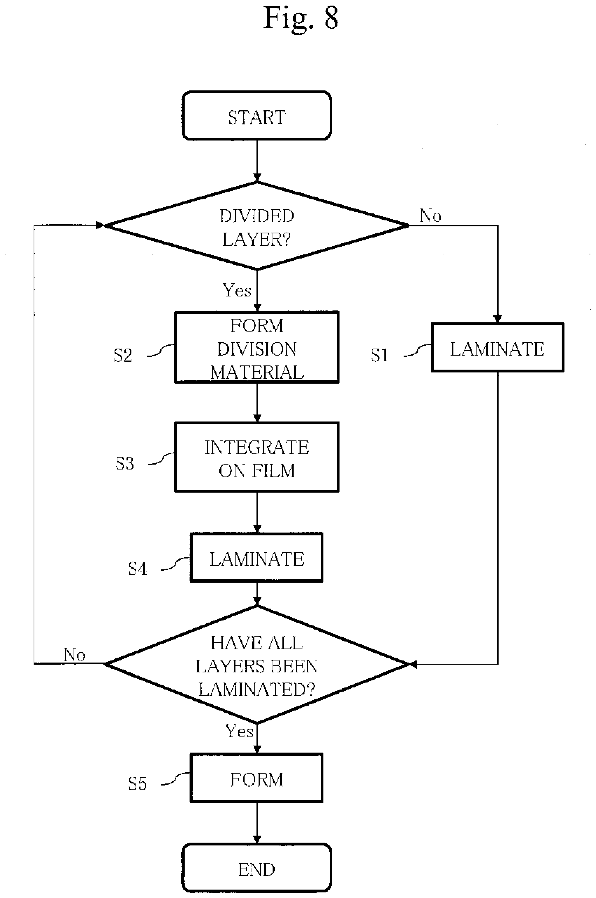

A specific example of a method of manufacturing the laminate 1 according to the present invention will be described with reference to FIGS. 8 and 9. The manufacturing method is equivalent to a laminate manufacturing method. FIG. 8 is a flow diagram illustrating an example of the manufacturing method of the laminate 1 according to Embodiment 5. Further, FIG. 9 is an explanation diagram illustrating a specific example of the manufacturing method of the laminate 1 according to Embodiment 5.

Through steps S1 to S5, the laminate 1 is produced in which, in at least one layer of layers that constitute the laminate 1, there are at least three regions in the layer. Here, a case will be described where the total number of layers is 2N+1, the N+1-th layer is the divided layer 12, and other layers are the undivided layers 11 in the produced laminate 1. Further, it is assumed that a material that constitutes the N+1-th layer is fiber reinforced plastic.

### Step S1

First, step S1 is repeated N times. As a result, as illustrated in (a) and (b) of FIG. 9, N layers of undivided intermediate bodies 31 are produced by laminating the undivided intermediate body 31 N times. Here, the undivided intermediate body 31 is a material to be the undivided layer 11, and is also referred to as an undivided fiber reinforced plastic intermediate body. As a specific example, prepreg composed of carbon fiber and B-stage epoxy resin is used as the undivided intermediate body 31.

This step is equivalent to a step to laminate an undivided intermediate body layer which is a layer that has not been divided in the subject direction and composed of fiber reinforced plastic.

### Step S2

Here, as illustrated in (c) of FIG. 9, at least three divided intermediate bodies 32 are produced which are appropriately arranged in the longitudinal direction, the lateral direction, or both of those directions of the laminate 1. Here, the divided intermediate body 32 is a material to be the divided region constituent material 21, and is also referred to as a divided fiber reinforced plastic intermediate body.

The thermal expansion coefficient of at least one of the divided intermediate bodies 32 in the division direction differs from the thermal expansion coefficient of at least one of other divided intermediate bodies 32 in the division direction.

In FIG. 9, the thermal expansion coefficient in the division direction differs between a divided intermediate body 32a and a divided intermediate body 32c, and a divided intermediate body 32b. Each of the divided intermediate bodies 32 is produced to exhibit a desirable property when all of the divided intermediate bodies 32 are integrated to form a layer of the laminate 1. As a specific example, prepreg composed of carbon fiber and B-stage epoxy resin is used as the divided intermediate body 32.

This step is equivalent to a step to form a material that constitutes each region of the three or more regions of the divided layer 12.

### Step S3

Here, as illustrated in (d) of FIG. 9, the divided intermediate body 32 produced in step S2 is arranged on a film 33. The film 33 is, as a specific example, a release film. When prepreg is used as the divided intermediate body 32, the divided intermediate body 32 is held on the film 33 due to tackiness of the prepreg. At least three of the divided intermediate bodies 32 are arranged without gaps in the division direction, and are in a form that can be handled as one body.

At least three of the divided intermediate bodies 32 are arranged in the divided layer 12 to have the thermal expansion coefficient of at least one of materials each of which constitutes each region of the three or more regions in the subject direction differs from the thermal expansion coefficient of other materials each of which constitutes each region of the three or more regions in the subject direction.

This step is equivalent to a step to form a divided intermediate body layer to be the divided layer 12, by arranging on the film 33, materials each of which constitutes each region of the three or more regions, and integrating the materials each of which constitutes each region of the three or more regions.

### Step S4

Here, as illustrated in (e) of FIG. 9, the divided intermediate bodies 32 integrated in step S3 are laminated on the undivided intermediate body positioned on the upper most among the N layers of the undivided intermediate bodies 31. When the film 33 on which the divided intermediate bodies 32 are arranged does not form the laminate 1, the film 33 is removed after the divided intermediate bodies 32 are laminated, as illustrated in (f) of FIG. 9. This step is equivalent to a step to laminate the divided layer 12 on the undivided intermediate body layer.

After that, as illustrated in (g) of FIG. 9, the undivided intermediate body 31 is laminated as each of N+2th-layer to 2N+1th-layer by repeating step S1 N times. As a result, an aggregation 34 in which 2N+1 layers are laminated is formed. The aggregation 34 is also referred to as an aggregation of fiber reinforced plastic intermediate bodies.

### Step S5

Here, the aggregation 34 in which 2N+1 layers has been laminated is formed. A specific example of a method of forming the aggregation 34 is an autoclave method. When the autoclave method is used, the inside is evacuated, and pressure and heat are applied from the outside, after the aggregation 34 in which 2N+1 layers are laminated is covered with a bagging film. As a specific example of a method of the pressurization and heating, a method of keeping a temperature of 120 °C for three hours under three atmosphere pressure is considered.

This step is equivalent to a step to form matrix resin of the undivided intermediate body layer.

As with the laminate 1 according to the embodiment described above, the laminate 1 produced through the process described above has a desirable thermal expansion coefficient in the division direction without increasing thickness, by controlling a rate of a material that constitutes a division region in the division direction.

The case has been described where the number of divided layers is one. However, the number of divided layers may be two or more. When the divided layers are continuous, steps S2 to S4 are repeatedly executed as many times as necessary after step S4 has been executed. When the divided layers are not continuous, the undivided layers are laminated as necessary by executing step S1 as many times as necessary after step S4 is executed. After that, steps S2 to S4 are executed.

Further, the case has been described where the prepreg is used as each of the undivided intermediate body 31 and the divided intermediate body 32. However, another material may be used as the undivided intermediate body 31 and the divided intermediate body 32 as long as the material turns to fiber reinforced plastic after the aggregation 34 is formed. Therefore, as a specific example, a semipreg using thermoplastic resin, fiber, fiber cloth, braid, or the like may be used as each of the undivided intermediate body 31 and the divided intermediate body 32.

Further, a case has been described where the divided intermediate body 32 is composed of the fiber reinforced plastic. However, the divided intermediate body 32 may not be composed of the fiber reinforced plastic. As a specific example, the divided intermediate body 32 may be composed of rubber, resin, metal, ceramic, or a combination thereof.

Further, the case has been described where the release film is used alone as the film 33. However, the film 33 may have another form as long as at least three divided intermediate bodies 32 can be handled in an integrated state in step S4. As a specific example, the film 33 may be a film coated with adhesive on the release film or a film composed of matrix resin that constitutes the laminate 1.

When the film 33 composed of the matrix resin is used, the film 33 is not removed after the divided intermediate bodies 32 have been laminated. When a material having no tackiness is used as the divided intermediate body 32, it is preferable to use the film 33 composed of the matrix resin that constitutes the laminate 1 in order to relax a positional deviation after the divided intermediate bodies 32 are laminated, and to form them as they are. Further, a line may be drawn on the film 33 to serve as a guide for the divided intermediate body 32.

Further, the method of forming the aggregation 34 by using the autoclave method has been described. However, the aggregation 34 may be formed using another method as long as resin that constitutes the laminate 1 is appropriately formed. As a specific example, a hand lay-up method, a press formation method, a Resin Transfer Molding (RTM) method, a Vacuum assisted Resin Transfer Molding (VaRTM) method, or the like may be used as the method of forming the aggregation 34. The pressurization method and the heating method differ depending on the matrix resin to be used.

### Description of Effects of Embodiment 5

According to the present embodiment, a layer formed by at least three divided intermediate bodies 32 can be laminated relatively easily.

### Embodiment 6.

Differences from the embodiments described above will be mainly described with reference to the drawings.

### Description of Configuration

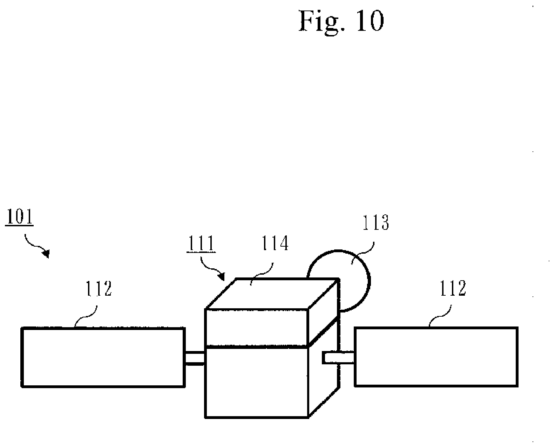

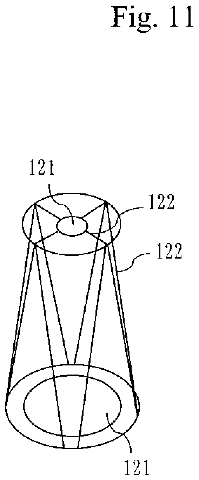

The space structure 101 having an optical support structure to which the laminate 1 according to Embodiments 1 to 4 is applied will be described with reference to FIGS. 10 and 11. Hereinafter, descriptions of points that are the same as Embodiments 1 to 4 will be omitted as appropriate, and differences from Embodiments 1 to 4 will be mainly described.

FIG. 10 is a schematic diagram illustrating a specific example of the space structure 101 according to Embodiment 6. The space structure 101 includes the laminate 1. FIG. 10 illustrates a case where the space structure 101 is an artificial satellite. As illustrated in FIG. 10, the space structure 101 includes a structure body 111, a photovoltaic power generation panel 112, and an antenna 113.

A specific example of the structure body 111 is a satellite structure. The structure body 111 mounts a device for accomplishing each mission of an artificial satellite. A specific example of the device is a telescope 114. As a specific example, the laminate 1 is used as a member of the telescope 114.

As a specific example, the photovoltaic power generation panels 112 are connected to both sides of the structure body 111.

As a specific example, the antenna 113 is attached to the upper surface and the front surface of the structure body 111.

FIG. 11 is a schematic diagram illustrating the inside of the telescope 114 according to Embodiment 6. The telescope 114 is configured with a plurality of reflectors 121, a support structure 122 that supports the plurality of reflectors 121, and the like. In order to maintain observational accuracy of the telescope 114, the support structure 122 is required to have extremely high dimensional stability against a temperature change that occurs in outer space.

On the other hand, the support structure 122 is required to be lightweight and thinning in order to reduce the cost for launching the space structure 101. It is possible to relax an increase in weight and volume of the support structure 122 while maintaining dimensional stability against a thermal change, by using in the support structure 122, the laminate 1 according to one of Embodiments 1 to 4. Therefore, optical performance of the telescope 114 can be maintained and improved.

The case has been described where the space structure 101 is an artificial satellite. However, the space structure 101 may be any structure that is in outer space. Therefore, the space structure 101 may be, as a specific example, a space station, a probe, a space photovoltaic power generation system, or the like.

Further, the support structure 122 of the telescope 114 mounted on the artificial satellite has been described as an application example of the laminate 1. However, the laminate 1 may be applied to another structure. As a specific example, the laminate 1 may be applied to the antenna 113, the photovoltaic power generation panel 112, or the like.

### Description of Effects of Embodiment 6

According to the present embodiment, it is possible to highly functionalize the space structure 101 while relaxing an increase in weight of the space structure 101.

### ** Other Embodiments

The above embodiments can be freely combined, or any component of each of the embodiments can be modified. Alternatively, in each of the embodiments, any component can be omitted.

Alternatively, the embodiments are not limited to those presented in Embodiments 1 and 6, and various modifications can be made as needed. The procedures described using the flowcharts or the like may be suitably modified.

### List of Reference Signs

- 1:: laminate
- 11:: undivided layer
- 12:: divided layer
- 12a:: lowest layer
- 12b:: intermediate layer
- 12c:: upper most layer
- 21, 21a, 21b, 21c:: divided region constituent material
- 22:: resin layer
- 31:: undivided intermediate body
- 32, 32a, 32b, 32c:: divided intermediate body
- 33:: film
- 34:: aggregation
- 101:: space structure
- 111:: structure body
- 112:: photovoltaic power generation panel
- 113:: antenna
- 114:: telescope
- 121:: reflector
- 122:: support structure.

## Claims

1. A laminate comprising a divided layer which is a layer having three or more regions by being divided into three or more in planar view in a subject direction, wherein
a thermal expansion coefficient in the subject direction of a material that constitutes at least one region of the regions of the divided layer differs from a thermal expansion coefficient in the subject direction of a material that constitutes at least one region of other regions of the divided layer.

2. The laminate according to claim 1,
wherein a material that constitutes each region of the regions of the divided layer is fiber reinforced plastic, and
a fiber orientation in planar view of the material that constitutes at least one region of the regions of the divided layer differs from a fiber orientation in the planar view of the material that constitutes at least one region of other regions of the divided layer.

3. The laminate according to claim 1 or 2,
wherein a material that constitutes each region of the regions of the divided layer is fiber reinforced plastic, and
at least one of fiber and matrix resin differs between the material that constitutes at least one region of the regions of the divided layer and the material that constitutes at least one region of other regions of the divided layer.

4. The laminate according to any one of claims 1 to 3,
a material that constitutes each region of the regions of the divided layer is arranged symmetrically in planar view, in the division direction with regard to materials and dimensions.

5. The laminate according to claim 4,
wherein a material that constitutes each region of the regions of the divided layer is arranged in a staggered pattern or a grid pattern in planar view.

6. The laminate according to any one of claims 1 to 5 comprising two adjacent divided layers,
wherein positions of boundaries between regions of each divided layer of the two adjacent divided layers are different between the two adjacent divided layers.

7. The laminate according to any one of claims 1 to 6 comprising at least one resin layer.

8. The laminate according to any one of claims 1 to 7,
wherein each of a lowest surface and an upper most surface of the laminate is composed of fiber reinforced plastic, and
each of the lowest surface and the upper most surface is not the divided layer.

9. A space structure comprising the laminate described in any one of claims 1 to 8.

10. A laminate manufacturing method to manufacture a laminate including a divided layer which is a layer having three or more regions by being divided into three or more regions in planar view in a subject direction comprising:
- a step to laminate an undivided intermediate body layer which is a layer that has not been divided in the subject direction and composed of fiber reinforced plastic;
- a step to form a material that constitutes each region of the three or more regions;
- a step to form a divided intermediate body layer which is a layer to be the divided layer, by arranging on a film, materials each of which constitutes each region of the three or more regions, and integrating the materials each of which constitutes each region of the three or more regions;
- a step to laminate the divided intermediate body layer on the undivided intermediate layer; and
- a step to form matrix resin of the undivided intermediate body layer, wherein
in the divided layer, a thermal expansion coefficient in the subject direction of at least one of the materials each of which constitutes each region of the three or more regions differs from a thermal expansion coefficient in the subject direction of at least one of other materials each of which constitutes each region of the three or more regions.
